# EUROPEAN PATENT APPLICATION

(11) **EP 4 704 236 A1**
(43) Date of publication of application: **04.03.2026**
(21) Application number: 24795577.6
(22) Date of filing: 27.02.2024
(51) Int. Cl.: H01M 50/244, H01M 50/30

(54) **BATTERY PACK SHELL, BATTERY PACK AND ELECTRIC DEVICE**

(30) Priority: 28.04.2023 CN 202310488301
(71) Applicant: BYD Company Limited, Shenzhen, Guangdong 518118 (CN)
(72) Inventor: TAN, Yunze, Shenzhen, Guangdong 518118 (CN); XIE, Shifeng, Shenzhen, Guangdong 518118 (CN); WU, Xiaoshuang, Shenzhen, Guangdong 518118 (CN); WANG, Xiaolong, Shenzhen, Guangdong 518118 (CN); TAN, Jing, Shenzhen, Guangdong 518118 (CN)
(74) Representative: Mathys & Squire
(86) International application number: PCT/CN2024/078828
(87) International publication number: WO 2024/222189

(57) **Abstract**

A battery pack shell, a battery pack and an electric device. The battery pack shell comprises a tray (1), which is internally provided with an accommodating cavity (10); a mounting support (2), which is mounted in the accommodating cavity (10); and a first foam blocking plate (3) and a second foam blocking plate (4), which are positioned in the accommodating cavity (10) and are both mounted on the mounting support (2), wherein the first foam blocking plate (3), the second foam blocking plate (4), the mounting support (2) and the tray (1) jointly define a foam filling area (5); and a first exhaust channel (2a) is formed on the side of the mounting support (2) facing away from the foam filling area (5), and an outlet of the first exhaust channel (2a) is positioned outside the foam filling area (5).

## Description

### CROSS-REFERENCE TO RELATED APPLICATIONS

The present disclosure claims priority to Chinese Patent Application No. 202310488301.2 filed on April 28, 2023, which is incorporated herein by reference in its entirety.

### FIELD

The present disclosure relates to the field of battery pack cases, specifically to a battery pack case, a battery pack, and an electrical device.

### BACKGROUND

In the related art, the plastic exhaust bracket of an existing battery pack case is not arranged with a glue blocking structure, and when foam glue is filled between cells, the foam glue will overflow between the cells in the battery pack case. The foam glue easily covers and blocks the explosion-proof portion of the battery cell and the exhaust structure of the battery pack case, so that gas in the battery cell cannot be discharged when the cell is in thermal runaway. Moreover, foam glue can easily cover other members of the battery pack, thereby reducing the safety of the battery pack in use.

### SUMMARY

The present disclosure aims to solve, at least to some extent, one of the above-mentioned technical problems in the prior art. Therefore, the present disclosure provides a battery pack case, which prevents foam glue from overflowing the glue filling area and improves safety of the battery pack in use.

The present disclosure also provides a battery pack having the battery pack case described above.

The present disclosure also provides an electrical device having the battery pack described above.

A battery pack case according to the present disclosure includes:
a tray, an accommodating cavity being formed in the tray;
a mounting bracket, the mounting bracket being mounted in the accommodating cavity;
a first glue blocking plate and a second glue blocking plate, the first glue blocking plate and the second glue blocking plate being arranged in the accommodating cavity and both being mounted to the mounting bracket, and the first glue blocking plate, the second glue blocking plate, the mounting bracket and the tray together defining a glue filling area;
and a first exhaust passage being formed on one side of the mounting bracket away from the glue filling area, and an outlet of the first exhaust passage beings arranged outside the glue filling area.

According to the battery pack case of the present disclosure, the first glue blocking plate, the second glue blocking plate, the mounting bracket and the tray together define a glue filling area, which is beneficial to prevent foam glue from overflowing the glue filling area, reduce the risk that the foam glue covers and blocks the explosion-proof portion of the battery cell and the exhaust structure of the battery pack case, so that gas in the battery cell can be discharged when the battery cell is in thermal runaway. Moreover, the risk that the foam glue covers other members of the battery pack is reduced, and the working performance of other members of the battery pack can be ensured, thus improving the safety of the battery pack in use.

A battery pack according to the present disclosure includes a plurality of battery cells and a battery pack case described above, the plurality of battery cells are mounted to the mounting bracket, and a plurality of explosion-proof portions of the battery cells are in one-to-one correspondence with a plurality of exhaust ports of the mounting bracket.

According to the battery pack of the present disclosure, when thermal runaway occurs in the battery cell, it is ensured that the exhaust port can be kept clear of the explosion-proof portion, the explosion-proof portion normally opens, and gas discharged from the inside of the battery cell flows into the first exhaust passage from the exhaust port, and the gas flows along the first exhaust passage, so that the gas inside the battery cell is quickly discharged, which is beneficial to reduce the internal pressure of the battery cell and further reduces the risk of explosion of the battery cell.

According to an electrical device of the present disclosure, the electrical device includes the battery pack described above.

According to the electrical device of the present disclosure, the risk of explosion of the battery cell is reduced, and the safety of the electrical device in use is improved.

Additional aspects and advantages of the present disclosure will be set forth in part in the following description, and in part will become apparent from the following description, or will be learned by the practice of the present disclosure.

### BRIEF DESCRIPTION OF THE DRAWINGS

FIG. 1 is a perspective view of a battery pack case according to an embodiment of the present disclosure;
FIG. 2 is an enlarged view at a in FIG. 1;
FIG. 3 is an explosion view of a mounting bracket, a first glue blocking plate, and a second glue blocking plate according to an embodiment of the present disclosure;
FIG. 4 is an enlarged view at b in FIG. 3;
FIG. 5 is an enlarged view at c in FIG. 3;
FIG. 6 is an enlarged view at d in FIG. 3;
FIG. 7 is a schematic assembly view of a mounting bracket, a first glue blocking plate, and a second glue blocking plate according to an embodiment of the present disclosure;
FIG. 8 is an enlarged view at e in FIG. 7;
FIG. 9 is a top view of a battery pack case according to an embodiment of the present disclosure;
FIG. 10 is a cross-sectional view at A-A in FIG. 9;
FIG. 11 is an enlarged view at f in FIG. 10;
FIG. 12 is an enlarged view at g in FIG. 10.

### DETAILED DESCRIPTION

Hereinafter, embodiments of the present disclosure are described in detail, examples of embodiments are shown in the accompanying drawings, in the embodiments the same or similar reference numerals denote the same or similar elements or elements having the same or similar functions throughout. The embodiments described below with reference to the accompanying drawings are exemplary and are intended to be used to explain the present disclosure, and are not to be construed as limiting the present disclosure.

In the description of the present disclosure, it will be understood that the orientation or positional relationship indicated by the terms "longitudinal", "lateral", "length", "width", "thickness", "upper", "lower", "front", "back", "left", "right", "vertical", "horizontal", "top", "bottom", "inner", "outer", etc. is based on the orientation or positional relationship shown in the accompanying drawings, and is not intended to indicate or imply that the referred device or element must have a specific orientation, be constructed and operate in a specific orientation, and therefore cannot be construed as limiting the present disclosure.

Furthermore, the terms "first" and "second" are for descriptive purposes only, and are not to be understood as indicating or implicitly indicating relative importance or the number of technical features indicated. Thus, features defined as "first" or "second" may explicitly or implicitly include one or more of the features. In the description of the present disclosure, "a plurality" means at least two, such as two, three, etc. unless otherwise explicitly and specifically defined.

In the application, unless otherwise explicitly specified and defined, the terms "mounted", "connected", "connected", "fixed" and the like are to be understood broadly, for example, fixed connection, detachable connection, or integrated; it may be mechanically connected, may be electrically connected or may communicate with each other; it may be directly connected, or indirectly connected through an intermediate medium, or it may be the internal communication of two elements or the interaction of two elements. A person skilled in the art can understand the specific meanings of the above-mentioned terms in the present disclosure according to the specific circumstances.

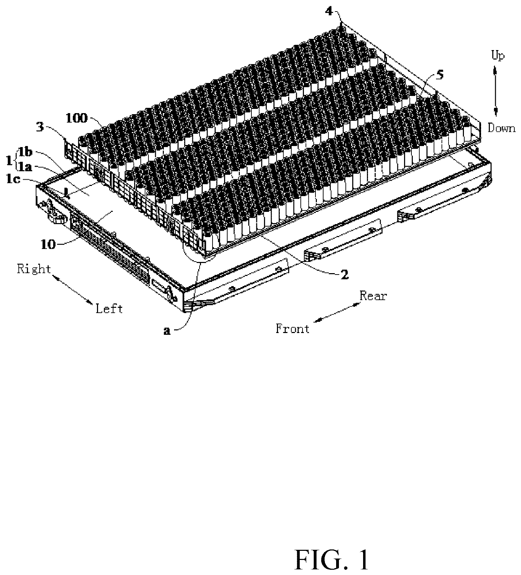

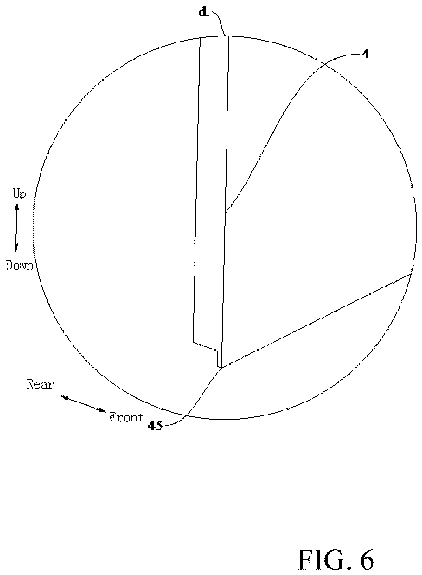

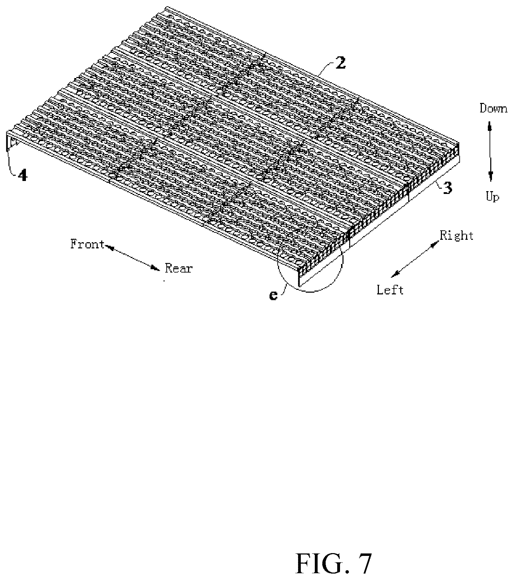

Hereinafter, a battery pack case according to an embodiment of the present disclosure will be described with reference to FIGS. 1 to 12, and the battery pack case can be applied to a battery pack, but the present disclosure is not limited thereto, and the battery pack case can be applied to other devices that need to be provided with a battery pack case, and the battery pack case applied to a battery pack is described in the present disclosure as an example.

As shown in FIGS. 1 to 12, according to a battery pack case in an embodiment of the present disclosure, the battery pack case includes a tray 1, a mounting bracket 2, a first glue blocking plate 3, and a second glue blocking plate 4. An accommodating cavity 10 is formed in the tray 1, the mounting bracket 2 is mounted in the accommodating cavity 10, a first glue blocking plate 3 and a second glue blocking plate 4 are arranged in the accommodating cavity 10 and are both mounted to the mounting bracket 2, and the first glue blocking plate 3, the second glue blocking plate 4, the mounting bracket 2 and the tray 1 together define a glue filling area 5. A first exhaust passage 2a is formed on one side of the mounting bracket 2 away from the glue filling area 5, and an outlet of the first exhaust passage 2a is arranged outside the glue filling area 5. The glue filling area 5 can be filled with a colloid, and the colloid can be a foam glue. The first glue blocking plate 3, the second glue blocking plate 4, the mounting bracket 2 and the tray 1 can block the foam glue from flowing out of the glue filling area 5, which is beneficial for preventing the foam glue from blocking the outlet of the first exhaust passage 2a and ensure the smooth flow of the first exhaust passage 2a.

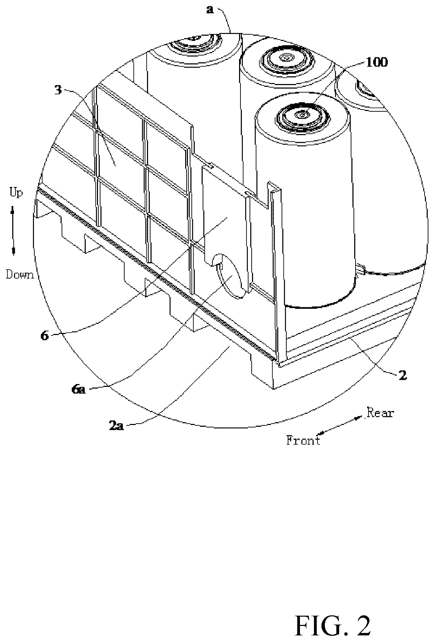

It will be noted that as shown in FIGS. 1 and 2, the height direction of the battery pack case is the up-down direction shown in FIGS. 1 and 2, and the first exhaust passage 2a is formed on the side of the mounting bracket 2 away from the glue filling area 5, and it will be understood that the first exhaust passage 2a is formed on the lower surface of the mounting bracket 2 when the mounting bracket 2 is placed in the direction shown in FIG. 2. A plurality of battery cells 100 of the battery pack are all mounted to the mounting bracket 2, and the plurality of battery cells 100 are arranged in the glue filling area 5, and the glue filling area 5 is filled with foam glue, so that the plurality of battery cells 100 are fixed in the glue filling area 5. When the foam glue flows in the foam glue filling area 5, the first glue blocking plate 3 and the second glue blocking plate 4 can block the foam glue from flowing out of the foam glue filling area 5, thereby reducing the risk that the foam glue covers and blocks the explosion-proof portion of the battery cell 100 and the exhaust structure of the battery pack case. The outlet of the first exhaust passage 2a is in communication with the exhaust structure of the battery pack case, so that gas in the battery cell 100 can be discharged when the battery cell 100 is in thermal runaway. The risk that the foam glue covers other members of the battery pack can be reduced, and the working performance of other members of the battery pack can be ensured, thereby improving the safety of the battery pack in use.

Thus, the first glue blocking plate 3, the second glue blocking plate 4, the mounting bracket 2 and the tray 1 together define a glue filling area 5, which is beneficial to prevent the foam glue from overflowing the glue filling area 5, and reduces the risk that the foam glue covers and blocks the explosion-proof portion of the battery cell 100 and the exhaust structure of the battery pack case. Gas in the battery cell can be discharged when the battery cell 100 is in thermal runaway. Moreover, the risk that the foam glue covers other members of the battery pack is reduced, and the working performance of other members of the battery pack can be ensured, thereby improving the safety of the battery pack in use.

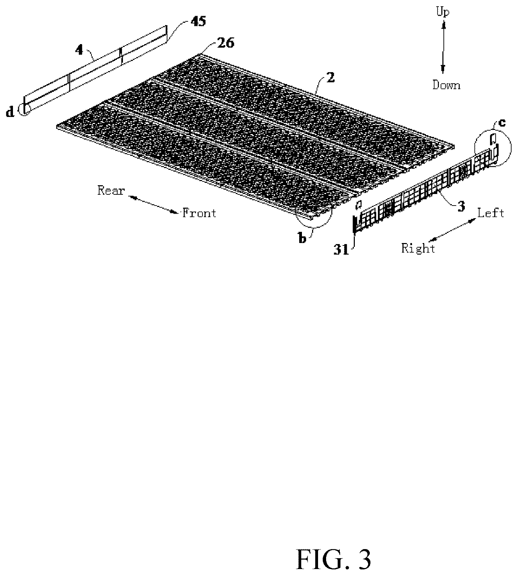

In some embodiments of the present disclosure, as shown in FIGS. 1 and 3, the first glue blocking plate 3 is opposite to and spaced apart from the second glue blocking plate 4 so as to form the glue filling area 5 between the first glue blocking plate 3 and the second glue blocking plate 4. Further, as shown in FIG. 1, when the mounting bracket 2 is placed in the direction shown in FIG. 1, in the length direction (i.e., the front-rear direction) of the mounting bracket 2, the first glue blocking plate 3 and the second glue blocking plate 4 are respectively arranged at both ends of the mounting bracket 2, and in the thickness direction (i.e., the up-down direction) of the mounting bracket 2, the first glue blocking plate 3 and the second glue blocking plate 4 are both arranged on the upper surface of the mounting bracket 2. Further, the first exhaust passage 2a is arranged on the lower surface of the mounting bracket 2, and the first exhaust passage 2a can be extended in a straight or a curve in the length direction of the mounting bracket 2 (i.e., the front-rear direction), and the outlets of one or both ends of the first exhaust passage 2a are opposite to the first glue blocking plate 3 and the second glue blocking plate 4, so that a glue filling area 5 is formed between the first glue blocking plate 3 and the second glue blocking plate 4. The foam glue is prevented from overflowing out of the glue filling area 5 from the first glue blocking plate 3 and/or the second glue blocking plate 4 and blocking the outlet of the first exhaust passage 2a, thereby improving the safety of the battery pack in use.

In other embodiments of the present disclosure, the first glue blocking plate 3 and the second glue blocking plate 4 may be arranged adjacent to each other, and it will also be understood that the first glue blocking plate 3 and the second glue blocking plate 4 are adjacent and connected. At the same time, in the length direction (i.e., the front-rear direction) of the mounting bracket 2, the first glue blocking plate 3 is arranged at one end of the mounting bracket 2, in the width direction (i.e., the left-right direction) of the mounting bracket 2, the second glue blocking plate 4 is arranged at one end of the mounting bracket 2 and both the first glue blocking plate 3 and the second glue blocking plate 4 are arranged on the upper surface of the mounting bracket 2. Further, the first exhaust passage 2a is arranged on the lower surface of the mounting bracket 2, and the first exhaust passage 2a can be extended in a curve. The outlet of one end of the first exhaust passage 2a is arranged at the end in the length direction (i.e., the front-rear direction) of the mounting bracket 2 and opposite to the first glue blocking plate 3, and/or the outlet of the other end of the first exhaust passage 2a is arranged at the end in the width direction (i.e., the left-right direction) of the mounting bracket 2 and opposite to the second glue blocking plate 4. When the first glue blocking plate 3 and the second glue blocking plate 4 are fixedly assembled to the mounting bracket 2, and when the mounting bracket 2, the first glue blocking plate 3 and the second glue blocking plate 4 are all arranged in the accommodating cavity 10, the mounting bracket 2, the first glue blocking plate 3, the second glue blocking plate 4, and the tray together define a glue filling area 5, thereby reducing the risk that the foam glue covers and blocks the explosion-proof portion of the battery cell 100 and the exhaust structure of the battery pack case. Gas in the battery cell 100 can be discharged when the battery cell 100 is in thermal runaway. Moreover, the risk that the foam glue covers other members of the battery pack is reduced, and the working performance of other members of the battery pack can be ensured, thus improving the safety of the battery pack in use.

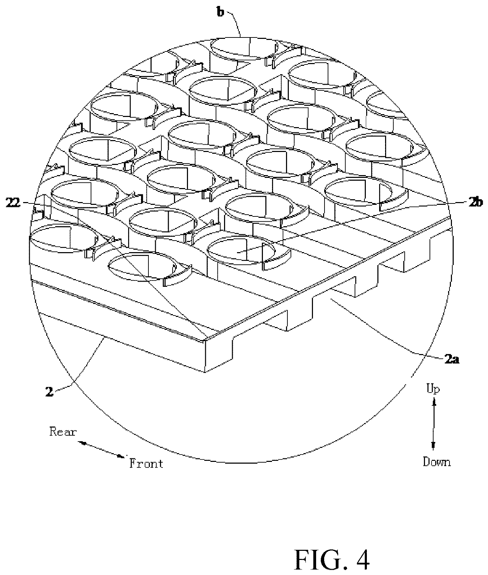

In some embodiments of the present disclosure, as shown in FIGS. 1 and 4, the mounting bracket 2 has an exhaust port 2b communicating with the first exhaust passage 2a, and the exhaust port 2b is adapted to correspond with an explosion-proof portion of the battery cell 100. Further, as shown in FIG. 1, a plurality of battery cells 100 are arranged on the battery pack case, the plurality of battery cells 100 are sequentially arranged to form a battery assembly, and the plurality of battery cells 100 can be combined to form a plurality of battery assemblies respectively. As shown in FIG. 2, the battery cells 100 are fixedly mounted on the upper surface of the mounting bracket 2 in the height direction of the battery pack case (i.e., the up-down direction), so as to realize the effect that the battery cells 100 are assembled in the glue filling area 5.

The glue filling area 5 is filled with the foam glue, so as to realize the effect that the battery cell 100 is bonded between the first glue blocking plate 3 and the second glue blocking plate 4 in the length direction of the battery pack case, that is, the battery cell 100 is bonded in the glue filling area 5, and at the same time, the foam glue is bonded between two adjacent battery cells 100, thereby improving the connection strength between the two adjacent battery cells 100 and improving the safety of the battery pack in use. As a result, by filling the glue filling area 5 with the foam glue, it is beneficial for improving the stability of the battery cell 100 in the glue filling area 5, so that the battery cell 100 can be reliably mounted in the glue filling area 5.

Further, as shown in FIG. 4, when the mounting bracket 2 is placed in the direction shown in FIG. 4, the first exhaust passage 2a is formed at the bottom of the mounting bracket 2 in the thickness direction of the mounting bracket 2 (i.e., the up-down direction), and the exhaust port 2b is configured as a through hole penetrating the mounting bracket 2 in the thickness direction of the mounting bracket 2 to realize the effect that the exhaust port 2b is in communication with the first exhaust passage 2a.

Further, when the battery cell 100 is mounted to the mounting bracket 2, the explosion-proof portion of the battery cell 100 is arranged corresponding with the exhaust port 2b in the thickness direction of the mounting bracket 2. In this way, when thermal runaway occurs in the battery cell 100, the exhaust port 2b can be kept clear of the explosion-proof portion, and the explosion-proof portion normally opens. Gas discharged from the inside of the battery cell 100 flows into the first exhaust passage 2a from the exhaust port 2b, and the gas flows along the first exhaust passage 2a, so that the gas inside the battery cell 100 is quickly discharged, which is beneficial for reducing the internal pressure of the battery cell 100 and further reduce the risk of explosion of the battery cell 100.

It should be noted that when thermal runaway occurs in the battery cell 100, the internal pressure of the battery cell 100 increases, and when the internal pressure of the battery cell 100 reaches a certain threshold value, gas inside the battery cell 100 forces the explosion-proof portion to separate the explosion-proof portion from the battery cell 100. The gas inside the battery cell 100 is rapidly released, thereby reducing the pressure inside the battery cell 100, improving the safety of the battery pack in use, and thus reducing the risk of explosion of the battery cell 100.

Accordingly, by arranging the exhaust port 2b corresponding with the explosion-proof portion of the battery cell 100, the exhaust port 2b is kept clear of the explosion-proof portion in the thickness direction of the mounting bracket 2, avoiding the risk that the mounting bracket 2 blocks the explosion-proof portion, ensuring that the explosion-proof portion normally opens in the case of thermal runaway of the battery cell 100, ensuring the safety of the battery cell 100 in use, and further ensuring the safety of the battery pack in use.

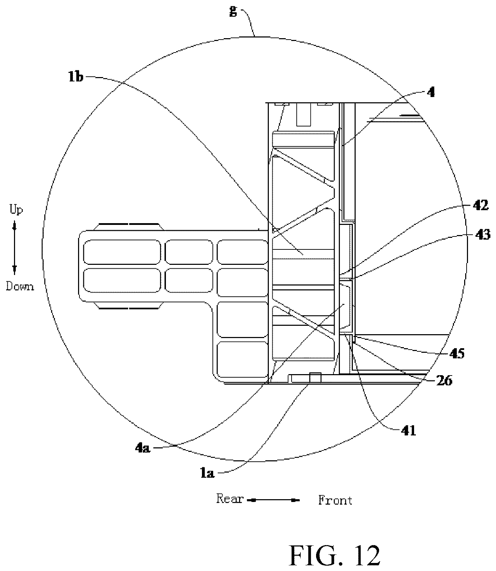

In some embodiments of the present disclosure, as shown in FIGS. 3, 4, and 11, the first glue blocking plate 3 may have a first plug-in portion 31, and the mounting bracket 2 may have a second plug-in portion 22, and the first plug-in portion 31 is matched with the second plug-in portion 22 in a plug-in mode so as to assemble the first glue blocking plate 3 to the mounting bracket 2. Further, as shown in FIG. 3, in the height direction (i.e., the up-down direction) of the first glue blocking plate 3, the first plug-in portion 31 is arranged at the bottom of the first glue blocking plate 3, and the first plug-in portion 31 may be constructed as a protrusion structure, and the formed protrusion structure is protruded toward a direction away from the first glue blocking plate 3. The second plug-in portion 22 may be configured as a recess structure adapted to the first plug-in portion 31, and as shown in FIG. 12, in the thickness direction of the mounting bracket 2, the second plug-in portion 22 is configured as a recess structure recessed from the upper surface of the mounting bracket 2 toward the inside of the mounting bracket 2. The first plug-in portion 31 is adapted to extend into the second plug-in portion 22 in the process of the first plug-in portion 31 matching with the second plug-in portion 22 in a plug-in mode, realizing the effect of the first plug-in portion 31 matching with the second plug-in portion 22 in a plug-in mode. In this way, the effect of fixed assembly of the first glue blocking plate 3 on the mounting bracket 2 is obtained.

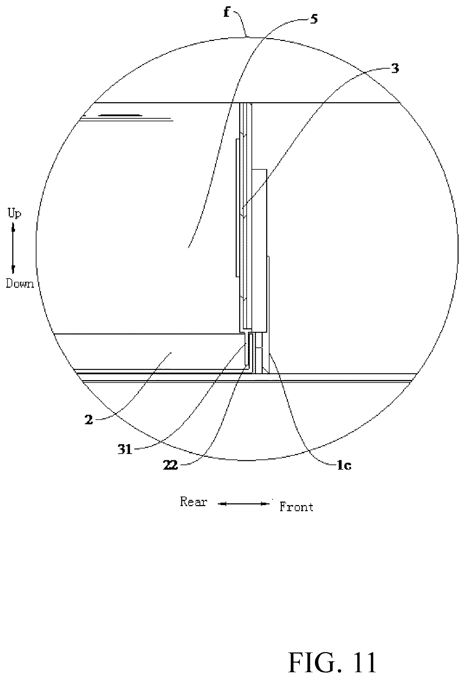

In some embodiments of the present disclosure, as shown in FIGS. 4 and 11, in the height direction of the battery pack case, the orthographic projection of the first plug-in portion 31 is offset from the orthographic projection of the first exhaust passage 2a.

Further, as shown in FIGS. 4 and 11, in the thickness direction of the mounting bracket 2, the second plug-in portion 22 is configured as a recess structure recessed from the upper surface of the mounting bracket 2 toward the inside of the mounting bracket 2, and the first exhaust passage 2a is configured as a recess structure recessed from the lower surface of the mounting bracket 2 toward the inside of the mounting bracket 2 in the height direction of the battery pack case (i.e., the thickness direction of the mounting bracket 2). The orthographic projection of the second plug-in portion 22 is offset from the orthographic projection of the first exhaust passage 2a, so that when the first plug-in portion 31 is inserted into the second plug-in portion 22, the effect of offsetting the orthographic projection of the first plug-in portion 31 and the orthographic projection of the first exhaust passage 2a is realized, preventing the first plug-in portion 31 from extending into the first exhaust passage 2a, thereby avoiding the first plug-in portion 31 blocking the first exhaust passage 2a and ensuring the patency of the first exhaust passage 2a.

In the length direction of the mounting bracket 2, the second plug-in portion 22 is spaced apart from the exhaust port 2b, so as to avoid the first plug-in portion 31 extending into the exhaust port 2b when the first plug-in portion 31 is inserted into the second plug-in portion 22, thereby avoiding the first plug-in portion 31 blocking the exhaust port 2b, and ensuring the patency of the exhaust port 2b.

In some embodiments of the present disclosure, as shown in FIGS. 1 and 11, the tray 1 has a limit portion 1c, the limit portion 1c is arranged in the accommodating cavity 10, the limit portion 1c is arranged on a side of the first glue blocking plate 3 away from the glue filling area 5, and the limit portion 1c is adapted to abut against the first glue blocking plate 3 for limiting. Further, as shown in FIG. 1, the limit portion 1c may be configured as a plate-like structure, and the limit portion 1c may be arranged in the accommodating cavity 10 and fixedly connected to the tray 1. As shown in FIG. 11, the limit portion 1c is arranged on the side of the first glue blocking plate 3 away from the glue filling area 5 in the length direction of the battery pack case, and the orthographic projection of the limit portion 1c and the orthographic projection of the first glue blocking plate 3 have an overlapping area in the length direction of the battery pack case. In this way, in the length direction of the battery pack case, the effect of a mutual limit between the limit portion 1c and the first glue blocking plate 3 is realized, and when the first glue blocking plate 3 tends to move toward the limit portion 1c, the limit portion 1c reliably supports the first glue blocking plate 3, so that the effect that the first glue blocking plate 3 reliably mounted and fixed to mounting bracket 2 is realized.

Further, when the mounting bracket 2 is arranged in the accommodating cavity 10, the limit portion 1c is arranged on the side of the mounting bracket 2 away from the glue filling area 5 in the length direction of the battery pack case. The orthographic projection of the limit portion 1c and the orthographic projection of the mounting bracket 2 have an overlapping area, so that in the length direction of the battery pack case, the effect of a mutual limit between the limit portion 1c and the mounting bracket 2 is realized, and when the mounting bracket 2 tends to move toward the limit portion 1c, the limit portion 1c reliably supports the mounting bracket 2, thereby realizing the effect of reliably mounting the mounting bracket 2 in the accommodating cavity 10.

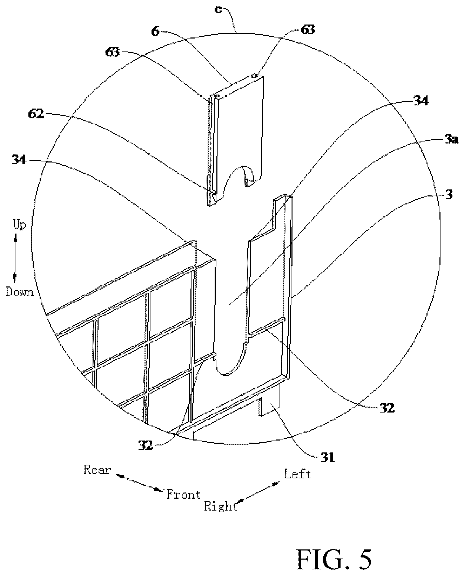

In some embodiments of the present disclosure, as shown in FIGS. 2 and 5, the battery pack case may further include: a limit member 6, the limit member 6 is inserted into the first glue blocking plate 3, and the limit member 6 and the first glue blocking plate 3 together define a mounting passage 6a. The mounting passage 6a is configured to mount pipes. The pipe may be a wiring harness pipe for electrically connecting the battery cell 100, a heat exchange medium pipe for heat exchange of the battery cell 100, or other equipment of pipes that need to be mounted in the glue filling area 5.

Further, as shown in FIG. 5, the first glue blocking plate 3 has a mounting notch 3a. When the first glue blocking plate 3 is placed in the direction shown in FIG. 5, the mounting notch 3a is arranged at one end away from the first plug-in portion 31 in the height direction of the first glue blocking plate 3, that is, an open mounting notch 3a is formed at the top end of the first glue blocking plate 3, and the operator places the pipe in the mounting passage 6a from the mounting notch 3a to realize the effect that the pipe is threaded in the first glue blocking plate 3.

Further, as shown in FIG. 2, where the first glue blocking plate 3 is placed in the direction of FIG. 2, when the limit member 6 is matched with the first glue blocking plate 3 in a plug-in mode, the mounting passage 6a is defined in the mounting notch 3a, that is, the limit member 6 and the first glue blocking plate 3 together define the mounting passage 6a, so as to realize the effect of limiting the pipe in the mounting passage 6a when the pipe is threaded in the mounting passage 6a and avoid the pipe separating from the first glue blocking plate 3.

Moreover, when the limit member 6 is matched with the first glue blocking plate 3 in a plug-in mode, in the thickness direction of the first glue blocking plate 3 (i.e., the front-rear direction), the orthographic projection of the limit member 6 coincides with the orthographic projection of the mounting notch 3a at least partially, so as to realize the limit member 6 blocking the non-mounting passage area in the mounting notch 3a in the thickness direction of the first glue blocking plate 3, thereby effectively avoiding the risk that the foam glue overflows the glue filling area 5 from the non-mounting passage area of the mounting notch 3a, and improving the safety of the battery pack in use.

Further, after the pipe is threaded in the mounting passage 6a, if there is a gap between the pipe and the inner wall of the mounting passage 6a, a filler can be used to fill the gap between the pipe and the inner wall of the mounting passage 6a, thereby realizing an effect of sealing the gap between the pipe and the inner wall of the mounting passage 6a, avoiding the risk that the foam glue overflows the glue filling area 5 from the gap between the pipe and the inner wall of the mounting passage 6a, and improving the safety of the battery pack in use.

In some embodiments of the present disclosure, as shown in FIG. 5, the limit member 6 has a third plug-in portion 63, the first glue blocking plate 3 has a fourth plug-in portion 34, and the third plug-in portion 63 is matched with the fourth plug-in portion 34 in a plug-in mode so as to assemble the limit member 6 to the first glue blocking plate 3. Further, as shown in FIG. 5, when the limit member 6 and the first glue blocking plate 3 are placed in the direction shown in FIG. 5, in the width direction of the limit member 6 (i.e., the left-right direction), both ends of the limit member 6 respectively have a third plug-in portion 63, and the third plug-in portion 63 may be configured as a plug-in groove. The plug-in groove is recessed toward the inside of the limit member 6, and in the height direction (i.e., the up-down direction) of the limit member 6, the plug-in groove is extended in the height direction of the limit member 6, so that the third plug-in portion 63 is matched with the fourth plug-in portion 34 in a plug-in mode in the up-down direction shown in FIG. 5 in the process of the third plug-in portion 63 matching with the fourth plug-in portion 34 in a plug-in mode. The up-down direction shown in FIG. 5 is the plug-in direction of the third plug-in portion 63 and the fourth plug-in portion 34.

Further, as shown in FIG. 5, in the width direction (i.e., the left-right direction) of the first glue blocking plate 3, the first glue blocking plate 3 has two fourth plug-in portions 34 arranged oppositely, and the fourth plug-in portions 34 are respectively arranged along the edges of the mounting notch 3a, so that the two third plug-in portions 63 are in one-to-one correspondence with the two fourth plug-in portions 34 respectively, in the plug-in process of the limit member 6 and the first glue blocking plate 3, thereby realizing the effect of the third plug-in portion 63 matching with the fourth plug-in portion 34 in a plug-in mode, and thus obtaining the effect of the limit member 6 matching with the first glue blocking plate 3 in a plug-in mode.

Further, as shown in FIG. 5, the fourth plug-in portion 34 may be configured as a plug-in plate, so that in the process of the limit member 6 matching with the first glue blocking plate 3 in a plug-in mode, the plug-in plate is adapted to extend into the plug-in groove to realize the effect of the third plug-in portion 63 matching with the fourth plug-in portion 34 in a plug-in mode, thereby obtaining the effect of the limit member 6 matching with the first glue blocking plate 3 in a plug-in mode.

Further, as shown in FIG. 5, according to the third plug-in portion 63 and the fourth plug-in portion 34 of the present disclosure, since the third plug-in portion 63 is configured as a plug-in groove and the fourth plug-in portion 34 is configured as a plug-in plate, when the third plug-in portion 63 is matched with the fourth plug-in portion 34 in a plug-in mode, the effect of limiting the relative position of the limit member 6 and the first glue blocking plate 3 is realized in the thickness direction of the first glue blocking plate 3 (i.e., the front-rear direction), so as to obtain the effect of the limit member 6 matching with the first glue blocking plate 3 for limiting, and reduce the risk that the limit member 6 and the first glue blocking plate 3 are separated from each other.

In some embodiments of the present disclosure, as shown in FIG. 5, the first glue blocking plate 3 has a first limit structure 32, the limit member 6 has a second limit structure 62, and the first limit structure 32 is matched with the second limit structure 62 for limiting, so as to limit the limit member 6 in the plug-in direction of the third plug-in portion 63 and the fourth plug-in portion 34.

Further, the first limit structure 32 may be configured as a limit protrusion, the second limit structure 62 may be configured as a limit recess, and the limit protrusion is adapted to match with the limit recess for limiting, thereby realizing the effect of the first limit structure 32 matching with the second limit structure 62 for limiting. As shown in FIG. 5, when the first glue blocking plate 3 and the limit member 6 are placed in the direction shown in FIG. 5, the first limit structure 32 is protruded toward a direction away from the first glue blocking plate 3 in the thickness direction of the first glue blocking plate 3 (that is, the front-rear direction), so that the first limit structure 32 is configured as a limit protrusion. In the thickness direction of the limit member 6 (i.e. in the front-rear direction), the second limit structure 62 is recessed toward the inside of the limit member 6, so that the second limit structure 62 is configured as a limit recess. When the limit member 6 is matched with the first glue blocking plate 3 in a plug-in mode, the first limit structure 32 is arranged in the second limit structure 62, and the orthographic projection of the first limit structure 32 and the orthographic projection of the second limit structure 62 have an overlapping area in the height direction of the first glue blocking plate 3, so that the effect of a mutual limit between the limit member 6 and the first glue blocking plate 3 is realized in the height direction of the first glue blocking plate 3, and the risk that the limit member 6 is separated from the first glue blocking plate 3 is reduced. It is ensured that the limit member 6 is reliably inserted into the first glue blocking plate 3, thereby effectively avoiding the risk that the foam glue overflows the glue filling area 5 from the non-mounting passage area of the mounting notch 3a, and thus improving the safety of the battery pack in use.

In some embodiments of the present disclosure, as shown in FIGS. 3, 6, and 12, the second glue blocking plate 4 has a fifth plug-in portion 45, and the mounting bracket 2 has a sixth plug-in portion 26, and the fifth plug-in portion 45 is matched with the sixth plug-in portion 26 in a plug-in mode so as to assemble the second glue blocking plate 4 to the mounting bracket 2.

Further, as shown in FIG. 3, in the thickness direction of the mounting bracket 2 (i.e., the up-down direction), both the sixth plug-in portion 26 and the second plug-in portion 22 are arranged on the upper surface of the mounting bracket 2, thereby realizing that both the first glue blocking plate 3 and the second glue blocking plate 4 are arranged on the same side of the mounting bracket 2. In the length direction of the mounting bracket 2 (i.e., the front-rear direction), the second plug-in portion 22 and the sixth plug-in portion 26 are respectively arranged at both ends of the mounting bracket 2, so as to realize the effect that the first glue blocking plate 3 is opposite to and spaced apart from the second glue blocking plate 4, and both are arranged on the mounting bracket 2, thus obtaining the effect that the glue filling area 5 is formed between the first glue blocking plate 3 and the second glue blocking plate 4.

Further, as shown in FIG. 12, when the second glue blocking plate 4 is placed in the direction shown in FIG. 12, a fifth plug-in portion 45 is arranged at the bottom end of the second glue blocking plate 4 in the height direction of the second glue blocking plate 4 (that is, the up-down direction), and the fifth plug-in portion 45 may be configured as a plate-like structure, and the formed plate-like structure is extended toward a direction away from the second glue blocking plate 4. As shown in FIG. 12, when the mounting bracket 2 is placed in the direction shown in FIG. 12, the sixth plug-in portion 26 may be configured as a recess structure adapted to the fifth plug-in portion 45. In the thickness direction of the mounting bracket 2 (that is, the vertical direction), the sixth plug-in portion 26 may be configured as a recess structure recessed from the upper surface of the mounting bracket 2 toward the inside of the mounting bracket 2. In the process of the fifth plug-in portion 45 matching with the sixth plug-in portion 26 in a plug-in mode, the fifth plug-in portion 45 extends into the sixth plug-in portion 26 to realize the effect of the fifth plug-in portion 45 matching with the sixth plug-in portion 26 in a plug-in mode, thereby obtaining the effect of fixed assembly of the second glue blocking plate 4 on the mounting bracket 2.

Further, as shown in FIG. 12, according to the present disclosure, the fifth plug-in portion 45 is configured as a plate-like structure and the sixth plug-in portion 26 is configured as a recess structure as an embodiment. When the fifth plug-in portion 45 is matched with the sixth plug-in portion 26 in a plug-in mode, the risk that the foam glue overflows the glue filling area 5 from the gap between the fifth plug-in portion 45 and the sixth plug-in portion 26 is reduced, thereby improving the safety of the battery pack in use.

In some embodiments of the present disclosure, as shown in FIG. 12, a limit boss 41 is arranged on a side of the second glue blocking plate 4 away from the glue filling area 5, and the limit boss 41 abuts against the upper surface of the mounting bracket 2. In this way, the effect that the mounting bracket 2 supports the second glue blocking plate 4 in the thickness direction of the mounting bracket 2 (i.e., the up-down direction) is realized, the stability of the second glue blocking plate 4 is improved, so that the second glue blocking plate 4 is reliably mounted to the mounting bracket 2.

Further, as shown in FIG. 12, when the second glue blocking plate 4 is placed in the direction shown in FIG. 12, in the height direction (i.e., the up-down direction) of the second glue blocking plate 4, the limit boss 41 is arranged close to one end of the sixth plug-in portion 26, and in the thickness direction of the second glue blocking plate 4, the limit boss 41 protrudes toward the side surface away from the second glue blocking plate 4, and the limit boss 41 is perpendicular to the sixth plug-in portion 26. When the fifth plug-in portion 45 is matched with the sixth plug-in portion 26 in a plug-in mode, in the thickness direction of the mounting bracket 2, the limit boss 41 abuts against the mounting bracket 2. In this way, the effect that the mounting bracket 2 supports the second glue blocking plate 4 is realized, and the stability of the second glue blocking plate 4 is further improved, so that the second glue blocking plate 4 is reliably mounted to the mounting bracket 2.

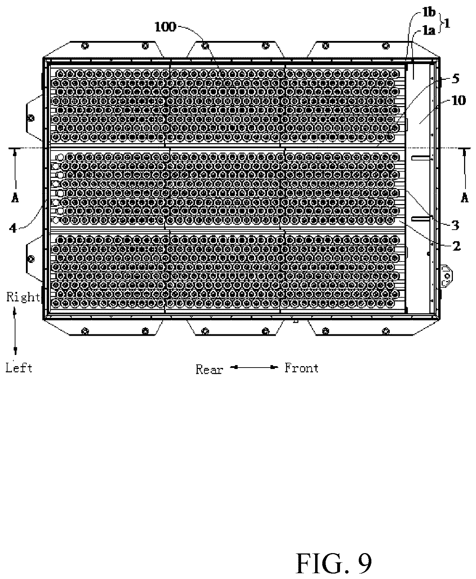

In some embodiments of the present disclosure, as shown in FIG. 9, the second glue blocking plate 4 abuts against a side beam 1b of the tray 1, and both the mounting bracket 2 and the first glue blocking plate 3 abut against the side beam 1b. When the first glue blocking plate 3 and the second glue blocking plate 4 are arranged in the accommodating cavity and are mounted to the mounting bracket 2, the mounting bracket 2, the first glue blocking plate 3, the second glue blocking plate 4 and the side beam 1b together define the glue filling area 5, thereby preventing the foam glue from overflowing the glue filling area 5, reducing the risk that the foam glue covers and blocks the explosion-proof portion of the battery cell 100 and the exhaust structure of the battery pack case. Gas in the battery cell 100 can be discharged when the battery cell 100 is in thermal runaway. Moreover, the risk that the foam glue covers other members of the battery pack is reduced, and the working performance of other members of the battery pack can be ensured, thus improving the safety of the battery pack in use. Furthermore, the second glue blocking plate 4 abuts against a side beam 1b of the tray 1, and both the mounting bracket 2 and the first glue blocking plate 3 abut against the side beam 1b, which is also beneficial to improve the stability of the second glue blocking plate 4 and the stability of the mounting bracket 2 and the first glue blocking plate 3, thereby reducing the risk that the foam glue overflows the glue filling area 5.

Further, as shown in FIG. 9, when the battery pack case is placed in the direction shown in FIG. 9, in the width direction of the battery pack case (i.e., the left-right direction), both ends of the mounting bracket 2 abut against the side beam 1b, and both ends of the first glue blocking plate 3 abut against the side beam 1b. Moreover, the mounting bracket 2, the first glue blocking plate 3, the second glue blocking plate, and the side beam 1b together define the glue filling area 5 in the accommodating cavity 10, so that the overflow of the glue filling area 5 is avoided, the risk that the foam glue covers other members of the battery pack is reduced, and the working performance of other members of the battery pack can be ensured, thus improving the safety of the battery pack in use.

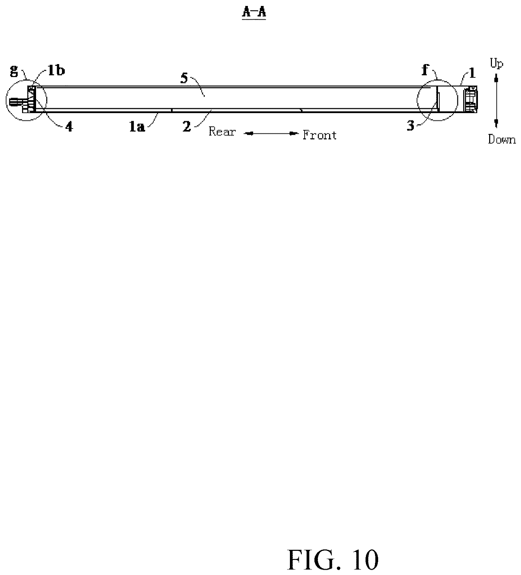

Further, as shown in FIG. 9, the tray 1 may include a bottom plate 1a and a side beam 1b, and the side beam 1b may be configured as a closed-loop beam structure approximately " 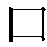 " shape. As shown in FIG. 10, when the tray 1 is placed in the direction of FIG. 10, in the height direction of the tray 1 (i.e., the up-down direction), the bottom plate 1a is arranged at the bottom end of the side beam 1b, and the bottom plate 1a and the side beam 1b together define the accommodating cavity 10 to obtain the effect that the accommodating cavity 10 is formed in the tray 1.

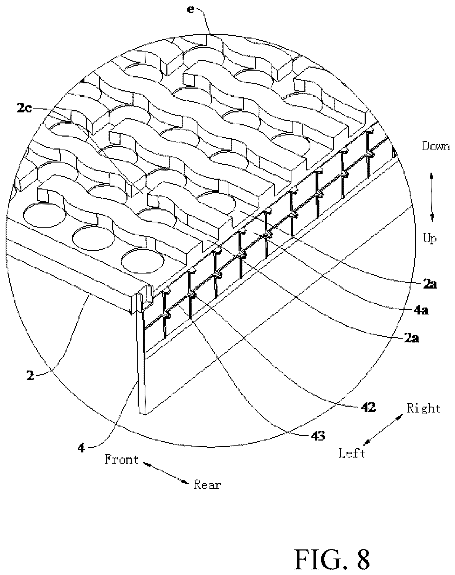

In some embodiments of the present disclosure, as shown in FIGS. 8 and 12, a second exhaust passage 4a is formed on a side of the second glue blocking plate 4 away from the first glue blocking plate 3, and the second exhaust passage 4a is in communication with the first exhaust passage 2a. The second exhaust passage 4a can be in communication with the exhaust structure of the battery pack case, so that gas in the first exhaust passage 2a can be discharged from the battery pack case through the second exhaust passage 4a, which is beneficial for improving the safety of the battery pack in use. As shown in FIG. 12, a second exhaust passage 4a is formed on the side of the second glue blocking plate 4 facing the side beam 1b of the tray 1, and the second exhaust passage 4a is in communication with the first exhaust passage 2a, so that when thermal runaway occurs in the battery cell 100, gas discharged from the battery cell 100 flows into the first exhaust passage 2a from the exhaust port 2b and flows to the second exhaust passage 4a along the first exhaust passage 2a, so as to rapidly release the gas inside the battery cell 100, which is beneficial for reducing the internal pressure of the battery cell 100. Further, the gas can be discharged from the battery pack case through the exhaust structure, and the risk of explosion of the battery cell 100 can be further reduced, thereby realizing the effect of improving the safety of the battery pack in use.

In some embodiments of the present disclosure, as shown in FIG. 12, a portion of the second glue blocking plate 4 abuts against the side beam 1b of the tray 1, and a portion of the second glue blocking plate 4 is recessed toward a direction close to the first glue blocking plate 3 to form the second exhaust passage 4a. In some embodiments of the present disclosure, in the height direction of the second glue blocking plate 4 (i.e., the up-down direction shown in FIG. 12), the upper half of the second glue blocking plate 4 is adapted to abut against the side beam 1b to realize the effect that the second glue blocking plate 4 abuts against the side beam 1b, thereby improving the stability of the second glue blocking plate 4. The second exhaust passage 4a is formed on the lower half of the second glue blocking plate 4, so that the second exhaust passage 4a is in communication with the first exhaust passage 2a, to realize the effect that the second exhaust passage 4a is in communication with the first exhaust passage 2a, thereby improving the safety of the battery pack in use. Thus, the second glue blocking plate 4 according to the embodiment of the present disclosure is beneficial for improving the stability of the second glue blocking plate 4, and at the same time, the effect that the second exhaust passage 4a being formed on the second glue blocking plate 4 is realized, so that the structure inside the battery pack case is compact, the utilization rate of the accommodating cavity 10 is improved, and the mass of the second glue blocking plate 4 is reduced, obtaining a lightweight effect of the second glue blocking plate 4. As shown in FIG. 12, the present disclosure describes that the second exhaust passage 4a is configured as a recess structure as an embodiment, and in the thickness direction of the second glue blocking plate 4 (i.e., the front-rear direction), the recess structure formed by the second exhaust passage 4a is recessed from the side of the second exhaust passage 4a facing the side beam 1b toward the inside of the second exhaust passage 4a to realize the effect that the second exhaust passage 4a is configured as a recess structure. When the second glue blocking plate 4 abuts against the side beam 1b, the side beam 1b covers the open end of the second exhaust passage 4a, so that the second exhaust passage 4a is formed as a cavity structure, thereby avoiding leakage in the process of gas flowing through the second exhaust passage 4a.

In some embodiments of the present disclosure, the side beam 1b of the tray 1 has an exhaust structure, and the exhaust structure is in communication with the first exhaust passage 2a and/or the second exhaust passage 4a. It will be understood that the exhaust structure is in communication with the first exhaust passage 2a, or the exhaust structure is in communication with the second exhaust passage 4a, or the exhaust structure is in communication with both the first exhaust passage 2a and the second exhaust passage 4a.

Further, the exhaust structure may be configured as an exhaust hole or an exhaust valve, one end of the exhaust structure is in communication with the first exhaust passage 2a and/or the second exhaust passage 4a, and the other end of the exhaust structure is in communication with the external environment of the battery pack case, to realize the effect that both the first exhaust passage 2a and the second exhaust passage 4a are in communication with the external environment, so that when thermal runaway occurs in the battery cell 100, and gas discharged from the inside of the battery cell 100 can be discharged from the battery pack through the exhaust structure, thereby improving the safety of the battery pack in use and reducing the risk of battery pack failure.

Further, the present disclosure describes how the first exhaust passage 2a is in communication with the second exhaust passage 4a and the second exhaust passage 4a is in communication with the exhaust structure as an embodiment, the effect that both the first exhaust passage 2a and the second exhaust passage 4a are in communication with the exhaust structure is realized, so that when thermal runaway occurs in the battery cell 100, gas in the battery cell 100 flows into the first exhaust passage 2a from the exhaust port 2b and flows into the second exhaust passage 4a along the first exhaust passage 2a, the effect that the gas is discharged from the battery pack case through the exhaust structure is obtained, and the gas inside the battery cell 100 can be quickly released, thereby reducing the internal pressure of the battery cell 100, and reducing the risk of battery pack failure.

In some embodiments of the present disclosure, as shown in FIG. 8, a communicating passage 2c may be further formed in the mounting bracket 2, a plurality of first exhaust passages 2a are configured, and the communicating passage 2c is connected between the two adjacent first exhaust passages 2a so as to enable communication between the two adjacent first exhaust passages 2a, so that when one of the two adjacent first exhaust passages 2a is blocked, gas in the blocked first exhaust channel 2a flows to the other first exhaust channel 2a along the communicating passage 2c, the exhaust effect of the first exhaust passage 2a is ensured, the risk of poor exhaust is reduced, and the gas inside the battery cell 100 can be quickly released, thereby reducing the internal pressure of the battery cell 100, and reducing the risk of explosion of the battery cell 100.

Further, a plurality of communicating passages 2c are connected between the two adjacent first exhaust channels 2a, and each of the plurality of communicating passages 2c is in communication with the two adjacent first exhaust channels 2a, so that when one of the plurality of communicating passages 2c is blocked, gas can flow between the two adjacent first exhaust channels 2a through the other communicating passages 2c, the communication between the two adjacent first exhaust channels 2a is ensured, and the gas inside the battery cell 100 can be quickly released, thereby reducing the internal pressure of the battery cell 100, and reducing the risk of explosion of the battery cell 100.

In some embodiments of the present disclosure, as shown in FIG. 8, a first recess and a second recess are arranged on a lower surface of a bottom wall of the mounting bracket 2, and the first recess and the second recess are respectively configured as the first exhaust passage 2a and the communicating passage 2c.

Further, as shown in FIG. 8, in the thickness direction (i.e., the up-down direction) of the mounting bracket 2, both the first recess and the second recess are recessed from the bottom wall of the mounting bracket 2 toward the inside of the mounting bracket 2 to form the first recess and the second recess on the lower surface of the bottom wall of the mounting bracket 2, thereby realizing the effect that the bottom wall of the mounting bracket 2 is formed with the first exhaust passage 2a and the communicating passage 2c.

When the mounting bracket 2 is assembled in the accommodating cavity 10, the bottom plate 1a covers the open ends of the first exhaust passage 2a and the communicating passage 2c, so that the effect that the first exhaust passage 2a and the communicating passage 2c form a cavity structure is realized, and the effect that the gas flows in the first exhaust passage 2a and the communicating passage 2c is obtained.

In some embodiments of the present disclosure, as shown in FIGS. 8 and 12, an abutting portion 42 is arranged on a side of the second glue blocking plate 4 away from the first glue blocking plate 3, and the abutting portion 42 abuts against the side beam 1b and is arranged in the second exhaust passage 4a, which is beneficial for improving the structural strength and stability of the area where the second glue blocking plate 4 is provided with the second exhaust passage 4a, so that the second glue blocking plate 4 is reliably mounted to the mounting bracket 2.

Further, as shown in FIG. 12, when the abutting portion 42 is configured as an abutting column, and the second glue blocking plate 4 is arranged in the accommodating cavity 10, one end of the abutting portion 42 abuts against the side beam 1b and the other end of the abutting portion 42 is connected to the surface of the second exhaust passage 4a facing the side beam 1b in the length direction of the battery pack case (i.e., the front-rear direction), the abutting portion 42 is supported and arranged between the second glue blocking plate 4 and the side beam 1b, so that the stability of the second glue blocking plate 4 is improved and the second glue blocking plate 4 is reliably mounted to the mounting bracket 2. Further, since the abutting portion 42 is supported and arranged between the second glue blocking plate 4 and the side beam 1b, when the glue is filled in the glue filling area 5, the abutting portion 42 can withstand the force applied by the foam glue on the second glue blocking plate 4 in the length direction of the battery pack case, and the risk of deformation of the second glue blocking plate 4 is reduced.

In some embodiments of the present disclosure, as shown in FIGS. 8 and 12, a reinforcing structure 43 is further formed on a side of the second glue blocking plate 4 away from the first glue blocking plate 3, a plurality of abutting portions 42 are configured, and at least one of the abutting portions 42 is connected to the reinforcing structure 43.

Further, as shown in FIGS. 8 and 12, the reinforcing structure 43 may be configured as a reinforcing rib, the reinforcing structure 43 is arranged on the side of the second glue blocking plate 4 facing the side beam 1b, which is beneficial to improve the structural strength of the second glue blocking plate 4, so that when glue is filled in the glue filling area 5, the second glue blocking plate 4 can withstand the force applied by the foam glue on the second glue blocking plate 4 in the length direction of the battery pack case, and the risk of deformation of the second glue blocking plate 4 is reduced. Further, the abutting portion 42 is connected to the reinforcing structure 43, which is beneficial to improve the connection strength between the abutting portion 42 and the second glue blocking plate 4, reduce the risk of deformation of the abutting portion 42, thus reliably supporting the abutting portion 42 between the second glue blocking plate 4 and the side beam 1b.

As shown in FIGS. 8 and 12, in some embodiments of the present disclosure, the reinforcing structure 43 is arranged in the second exhaust passage 4a, and the reinforcing structure 43 is connected to the abutting portion 42 as an example, thereby improving the stability of the abutting portion 42 and the structural strength of the second exhaust passage 4a in the second glue blocking plate 4.

According to the battery pack in the embodiment of the present disclosure, the battery pack includes a plurality of battery cells 100 and a battery pack case according to the embodiment described above, the plurality of battery cells 100 are mounted to the mounting bracket 2, and a plurality of explosion-proof portions of the battery cells 100 are in one-to-one correspondence with a plurality of exhaust ports. When thermal runaway occurs in the battery cell 100, it is ensured that the exhaust port 2b can be kept clear of the explosion-proof portion, the explosion-proof portion normally opens, and gas discharged from the inside of the battery cell 100 flows into the first exhaust passage 2a from the exhaust port 2b, and the gas flows along the first exhaust passage 2a, so that the gas inside the battery cell 100 is quickly discharged, which is beneficial for reducing the internal pressure of the battery cell 100 and further reducing the risk of explosion of the battery cell 100.

In some embodiments of the present disclosure, as shown in FIG. 1, the battery cell 100 is a cylindrical battery.

According to an electrical device in an embodiment of the present disclosure, the electrical device includes the battery pack in the above embodiment.

In the description of the present specification, a description with reference to the terms "one embodiment," "some embodiments," "examples," "specific examples," or "some examples," etc. means that a specific feature, structure, material, or characteristic described in connection with the embodiment or example is included in at least one embodiment or example of the present disclosure. In the present specification, schematic expressions of the above-described terms are not necessarily directed to the same embodiments or examples. Moreover, the specific features, structures, materials, or features described may be combined in a suitable manner in any one or more embodiments or examples. Furthermore, a person skilled in the art can join and combine different embodiments or examples described in this specification.

Although embodiments of the present disclosure have been shown and described above, it is to be understood that the above embodiments are exemplary and cannot be understood as limiting the present disclosure, and that a person skilled in the art may make changes, modifications, substitutions and variations to the above embodiments within the scope of the present disclosure.

## Claims

1. A battery pack case, comprising:
a tray (1), an accommodating cavity (10) being formed in the tray (1);
a mounting bracket (2), the mounting bracket (2) being mounted in the accommodating cavity (10);
a first glue blocking plate (3) and a second glue blocking plate (4), the first glue blocking plate (3) and the second glue blocking plate (4) being arranged in the accommodating cavity (10) and both being mounted to the mounting bracket (2), and the first glue blocking plate (3), the second glue blocking plate (4), the mounting bracket (2) and the tray (1) together defining a glue filling area (5);and
a first exhaust passage (2a) being formed on one side of the mounting bracket (2) away from the glue filling area (5), and an outlet of the first exhaust passage (2a) being arranged outside the glue filling area (5).

2. The battery pack case according to claim 1, wherein the first glue blocking plate (3) is opposite to and spaced apart from the second glue blocking plate (4) so as to form the glue filling area (5) between the first glue blocking plate (3) and the second glue blocking plate (4).

3. The battery pack case according to claim 2, wherein the mounting bracket (2) has an exhaust port (2b) communicating with the first exhaust passage (2a), and the exhaust port (2b) is adapted to correspond to an explosion-proof portion of the battery cell (100).

4. The battery pack case according to claim 3, wherein the first glue blocking plate (3) has a first plug-in portion (31), the mounting bracket (2) has a second plug-in portion (22), and the first plug-in portion (31) is matched with the second plug-in portion (22) in a plug-in mode so as to assemble the first glue blocking plate (3) to the mounting bracket (2).

5. The battery pack case according to claim 4, wherein an orthographic projection of the first plug-in portion (31) is offset from an orthographic projection of the first exhaust passage (2a) in a height direction of the battery pack case.

6. The battery pack case according to claim 4, wherein the tray (1) has a limit portion (1c), the limit portion (1c) is arranged in the accommodating cavity (10), the limit portion (1c) is arranged on a side of the first glue blocking plate (3) away from the glue filling area (5), and the limit portion (1c) is adapted to abut against the first glue blocking plate (3) for limiting.

7. The battery pack case according to any one of claims 1 to 6, wherein the battery pack case further comprises: a limit member (6), the limit member (6) is inserted into the first glue blocking plate (3), and the limit member (6) and the first glue blocking plate (3) together define a mounting passage (6a), and the mounting passage (6a) is configured to mount pipes.

8. The battery pack case according to claim 7, wherein the limit member (6) has a third plug-in portion (63), the first glue blocking plate (3) has a fourth plug-in portion (34), and the third plug-in portion (63) is matched with the fourth plug-in portion (34) in a plug-in mode so as to assemble the limit member (6) to the first glue blocking plate (3).

9. The battery pack case according to claim 8, wherein the first glue blocking plate (3) has a first limit structure (32), and the limit member (6) has a second limit structure (62), and the first limit structure (32) is matched with the second limit structure (62) for limiting, so as to limit the limit member (6) in the plug-in direction of the third plug-in portion (63) and the fourth plug-in portion (34).

10. The battery pack case according to any one of claims 1 to 9, wherein the second glue blocking plate (4) has a fifth plug-in portion (45), the mounting bracket (2) has a sixth plug-in portion (26), and the fifth plug-in portion (45) is matched with the sixth plug-in portion (26) in a plug-in mode so as to assemble the second glue blocking plate (4) to the mounting bracket (2).

11. The battery pack case according to claim 10, wherein a limit boss (41) is arranged on a side of the second glue blocking plate (4) away from the glue filling area (5), and the limit boss (41) abuts against the upper surface of the mounting bracket (2).

12. The battery pack case according to claim 2, wherein the second glue blocking plate (4) abuts against a side beam (1b) of the tray (1).

13. The battery pack case according to claim 12, wherein a second exhaust passage (4a) is formed on a side of the second glue blocking plate (4) away from the first glue blocking plate (3), and the second exhaust passage (4a) is in communication with the first exhaust passage (2a).

14. The battery pack case according to claim 13, wherein a portion of the second glue blocking plate (4) abuts against the side beam (1b) of the tray (1), and a portion of the second glue blocking plate (4) is recessed toward a direction close to the first glue blocking plate (3) to form the second exhaust passage (4a).

15. The battery pack case according to claim 14, wherein an abutting portion (42) is arranged on a side of the second glue blocking plate (4) away from the first glue blocking plate (3), and the abutting portion (42) abuts against the side beam (1b) and is arranged in the second exhaust passage (4a).

16. The battery pack case according to claim 15, wherein a reinforcing structure (43) is further formed on a side of the second glue blocking plate (4) away from the first glue blocking plate (3), a plurality of abutting portions (42) are configured, and at least one of the abutting portions (42) is connected to the reinforcing structure (43).

17. The battery pack case according to claim 13, wherein the side beam (1b) of the tray (1) has an exhaust structure, and the exhaust structure is in communication with the first exhaust passage (2a) and/or the second exhaust passage (4a).

18. The battery pack case according to any one of claims 1 to 17, wherein a communicating passage (2c) is further formed in the mounting bracket (2), a plurality of first exhaust passages (2a) are configured, and the communicating passage (2c) is connected between the two adjacent first exhaust passages (2a) so as to enable the communication between the two adjacent first exhaust passages (2a).

19. The battery pack case according to claim 18, wherein a first recess and a second recess are arranged on a lower surface of a bottom wall of the mounting bracket (2), and the first recess and the second recess are respectively configured as the first exhaust passage (2a) and the communicating passage (2c).

20. A battery pack, comprising a plurality of battery cells (100) and a battery pack case according to any one of claims 1 to 19, the plurality of battery cells (100) being mounted to the mounting bracket (2), and a plurality of explosion-proof portions of the battery cells (100) being in one-to-one correspondence with a plurality of exhaust ports (2b) of the mounting bracket (2).

21. The battery pack according to claim 20, wherein the battery cell (100) is a cylindrical battery.

22. An electrical device, comprising the battery pack according to claim 20 or 21.
